# FASCICULE DE BREVET EUROPEEN

(11) **EP 0 798 838 B1**
(45) Date de publication et mention de la délivrance du brevet: **10.12.2003**
(21) Numéro de dépôt: 97410037.2
(22) Date de dépôt: 25.03.1997
(51) Int. Cl.: H02J 3/18

(54) **Circuit d'amélioration du facteur de puissance à double décharge**
Schaltung zur Verbesserung des Leistungsfaktors mit doppelter Entladung
Circuit for improving the power factor using a double discharge

(30) Priorité: 29.03.1996 FR 9604270
(43) Date de publication de la demande: 01.10.1997
(73) Titulaire: STMicroelectronics S.A., 92120 Montrouge (FR)
(72) Inventeur: Rivet, Bertrand, 37100 Tours (FR)
(74) Mandataire: de Beaumont, Michel

(56) Documents cités:
- EP-A- 0 600 809
- DE-A- 2 228 042
- PROCEEDINGS OF THE ANNUAL APPLIED POWER ELECTRONICS CONFERENCE AND EXPOSITION. (APEC), LOS ANGELES, MAR. 11 - 16, 1990, no. CONF. 5, 11 Mars 1990, INSTITUTE OF ELECTRICAL AND ELECTRONICS ENGINEERS, pages 672-680, XP000143344 GHIARA T ET AL: "HIGH POWER FACTOR CONTROL SYSTEM IN MULTILEVEL CONVERTERS FOR AC HEAVY TRACTION DRIVES"
- I.E.E. PROCEEDINGS: GENERATION, TRANSMISSION AND DISTRIBUTION, vol. 142, no. 2, 1 Mars 1995, pages 202-210, XP000539802 EKANAYAKE J B ET AL: "EXPERIMENTAL INVESTIGATION OF AN ADVANCED STATIC VAR COMPENSATOR"
- CONFERENCE RECORD OF THE INDUSTRY APPLICATIONS CONFERENCE IAS ANNUA MEETING, TORONTO, OCT. 3 - 8, 1993, vol. PART 2, 3 Octobre 1993, INSTITUTE OF ELECTRICAL AND ELECTRONICS ENGINEERS, pages 901-908, XP000419551 CHOI N S ET AL: "MODELING AND ANALYSIS OF A STATIC VAR COMPENSATOR USING MULTILEVEL VOLTAGE SOURCE INVERTER"

## Description

La présente invention concerne le domaine des alimentations redressées obtenues à partir d'une tension alternative, par exemple la tension alternative du secteur, et destinées notamment à un système d'alimentation à découpage.

Un redresseur est généralement constitué d'un pont de diodes connecté à une alimentation alternative et fournissant à un condensateur de stockage, disposé entre des bornes de sortie du redresseur, une alimentation continue redressée. L'alimentation continue redressée est, par exemple, destinée à un convertisseur de puissance tel qu'un système d'alimentation à découpage.

Les redresseurs classiques sont généralement associés à des circuits, dits de compensation ou d'amélioration du facteur de puissance, qui sont notamment destinés à élargir l'impulsion de courant pompé sur le secteur à chaque alternance du secteur.

Parmi les solutions existantes pour corriger le facteur de puissance, on connaît un circuit utilisant une inductance et une diode montées en série entre une borne d'alimentation redressée et une première borne du condensateur. Une borne d'un commutateur est reliée entre l'inductance et la diode, et l'autre borne est reliée à la masse. Un processeur commande le commutateur de façon appropriée en fonction des tension et courant détectés. Un tel circuit, disponible par exemple auprès de la société SGS-Thomson Microelectronics sous la référence L6560, permet d'obtenir une correction quasiment parfaite du facteur de puissance, c'est-à-dire que le courant de charge du condensateur de stockage prend la forme d'une sinusoïde en phase avec la sinusoïde de tension. Un inconvénient d'un tel circuit de compensation du facteur de puissance réside dans le fait qu'il comprend une inductance non intégrable et coûteuse.

On connaît également d'autres circuits de compensation du facteur de puissance réalisés à partir de diodes et de résistances, mais ces circuits entraînent des pertes importantes dans les résistances, ce qui nuit au rendement du convertisseur.

Le document EP-A-0600809 décrit un compensateur dynamique de courant électrique alternatif comprenant des éléments inductifs.

Le document DE2228042 décrit également un dispositif de compensation à éléments inductifs comprenant un réseau de condensateurs commutables.

Le document "Proceedings of the annual applied power electronics conference and exposition. (APEC), Los Angeles, Mar. 11 - 16, 1990, no. Conf. 5, 11 mars 1990, Institute of Electrical and Electronics Engineers, pages 672-680, XP000143344 Ghiara T et al.: "High power factor control system in multilevel converters for AC heavy traction drives"" décrit d'autres circuits de correction du facteur de puissance à éléments inductifs.

La présente invention vise à proposer un dispositif d'amélioration du facteur de puissance qui puisse être intégralement réalisé à partir de composants semi-conducteurs.

Selon un premier aspect, la présente invention vise un tel dispositif qui soit de constitution particulièrement simple et peu onéreuse.

La présente invention vise également à ce que la tension minimale délivrée à la charge soit la plus élevée possible pour une tension alternative d'alimentation donnée.

Selon un deuxième aspect, la présente invention vise à ce que le dispositif d'amélioration du facteur de puissance puisse être réalisé sous forme de circuit intégré en minimisant la surface de silicium nécessaire au circuit.
Pour atteindre ces objets, la présente invention prévoit un dispositif d'amélioration du facteur de puissance d'un pont redresseur alimenté par une tension alternative et destiné à fournir une alimentation continue redressée, comportant deux condensateurs montés en série et ayant des valeurs différentes, un premier chemin de charge comportant un commutateur essentiellement destiné à un premier condensateur, un deuxième chemin de charge comportant un deuxième commutateur et exclusivement destiné à un deuxième condensateur de valeur supérieure à la valeur du premier condensateur, un premier chemin de décharge commutable et essentiellement destiné au premier condensateur, un circuit de commande pour commander individuellement les commutateurs, et un deuxième chemin de décharge exclusivement destiné au deuxième condensateur.

Selon un mode de réalisation de la présente invention, la fermeture du deuxième chemin de charge est synchronisée avec le passage à un maximum de la tension alternative d'alimentation.

Selon un mode de réalisation de la présente invention, le dispositif d'amélioration du facteur de puissance comporte un bloc de commande pour commuter à l'état fermé le premier chemin de décharge, uniquement après le passage par un maximum de la tension alternative d'alimentation.

Selon un mode de réalisation de la présente invention, le premier chemin de décharge comporte un premier commutateur intercalé entre le premier condensateur et une ligne d'alimentation redressée constituant un potentiel de référence.

Selon un mode de réalisation de la présente invention, le deuxième chemin de charge comporte un dispositif limiteur de courant en série avec un deuxième commutateur, entre le point milieu de l'association série des condensateurs et la ligne de référence.

Selon un mode de réalisation de la présente invention, le deuxième commutateur est commandable en ouverture et en fermeture.

Selon un mode de réalisation de la présente invention, le premier chemin de charge comporte une première diode en parallèle sur ledit premier commutateur, le deuxième chemin de décharge comportant une deuxième diode montée entre le point milieu entre les deux condensateurs et la ligne de référence.

Selon un mode de réalisation de la présente invention, ladite deuxième diode est une diode Zener.

Selon un mode de réalisation de la présente invention, lesdits commutateurs, lesdites diodes et ledit dispositif limiteur de courant sont réalisés au sein d'un même circuit intégré.

Selon un mode de réalisation de la présente invention, le premier condensateur est un condensateur basse-tension.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente un mode de réalisation d'un dispositif d'amélioration du facteur de puissance selon la présente invention ; et
la figure 2 illustre, sous forme de chronogrammes, le fonctionnement d'un dispositif tel que représenté à la figure 1.

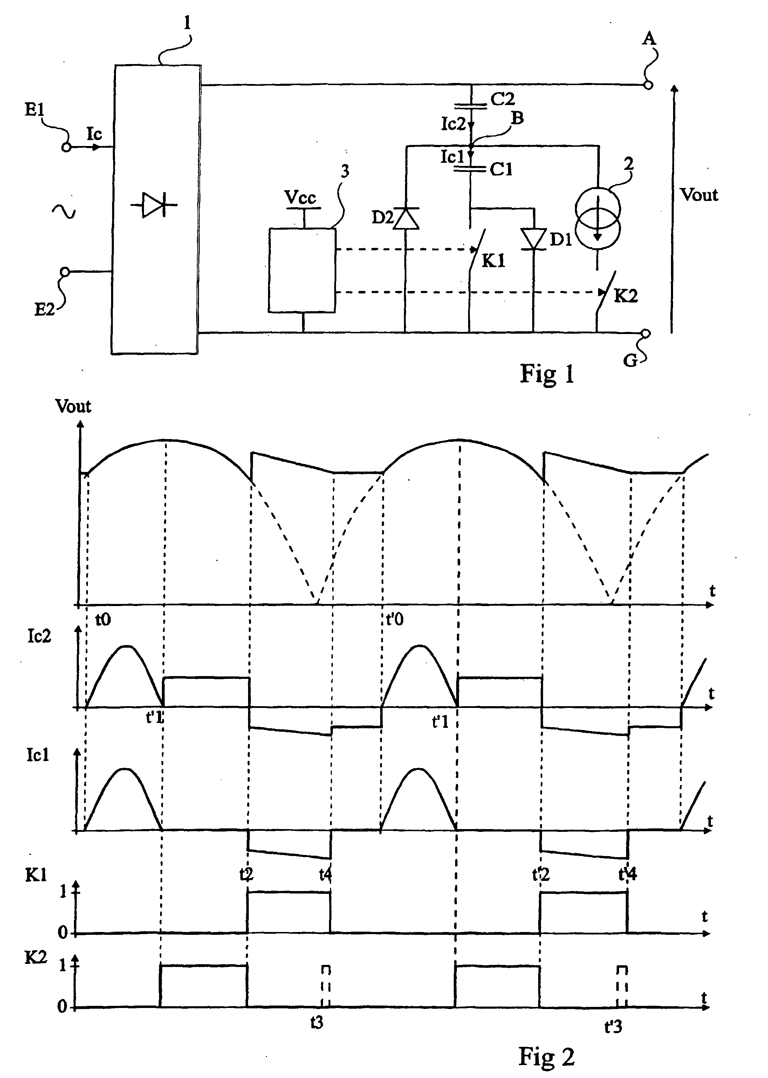

Pour des raisons de clarté, les chronogrammes de la figure 2 ne sont pas à l'échelle.

Un dispositif d'amélioration du facteur de puissance selon l'invention comporte deux condensateurs de stockage C1 et C2 en aval d'un pont redresseur 1 classique, par exemple, un pont de diodes. Le pont 1 est connecté à deux bornes E1 et E2 d'une alimentation alternative, par exemple la tension alternative du secteur. Une alimentation continue redressée Vout est délivrée sur deux bornes de sortie, respectivement, positive A et négative G, la borne G constituant généralement une borne de masse.

Selon l'invention, les deux condensateurs C1 et C2 sont montés en série et des chemins de charge et de décharge sont définis pour ces condensateurs entre les lignes A et G.

Une caractéristique de la présente invention est que les deux condensateurs C1 et C2 ont des valeurs différentes, le condensateur C2 ayant une valeur supérieure à la valeur du condensateur C1. Une première borne du condensateur C2 est reliée à la ligne A. Une première borne du condensateur C1 est reliée à l'anode d'une diode D1 dont la cathode est reliée à la ligne G. Un commutateur K1 est monté en parallèle sur la diode D1. Les deuxièmes bornes des condensateurs C1 et C2 sont reliées à un point B.

Un dispositif limiteur de courant, de préférence, un générateur de courant 2, en série avec un commutateur K2, est relié entre le point B et la ligne G. Une diode D2 est également connectée entre le point B et la ligne G.

Selon la présente invention, la diode D1 définit un premier chemin de charge, essentiellement destiné au condensateur C1, tandis que le générateur de courant 2 et le commutateur K2 définissent un deuxième chemin de charge commutable, exclusivement destiné au condensateur C2. Le commutateur K1 définit un premier chemin de décharge commutable, essentiellement destiné au condensateur C1, tandis que la diode D2 définit un deuxième chemin de décharge exclusivement destiné au condensateur C2.

Les commutateurs K1 et K2 sont commandés individuellement au moyen d'un circuit de commande adapté 3, alimenté par une basse-tension continue Vcc.

L'alimentation continue redressée Vout est destinée à une charge (non représentée), par exemple, un convertisseur de puissance tel qu'un système d'alimentation à découpage.

Le fonctionnement du dispositif selon l'invention tel que représenté à la figure 1 est illustré par la figure 2. Cette figure 2 représente, sous forme de chronogrammes, la tension Vout aux bornes de la charge, les courant IC1 et IC2 dans les condensateurs C1 et C2 et les périodes de conduction respectives des commutateurs K1 et K2. Les périodes de conduction des commutateurs K1 et K2 ont été représentées par un état "1" lorsque le commutateur est fermé et, par un état "0" lorsqu'il est ouvert.

On considère, en régime établi, un instant t0 où la tension alternative redressée (représentée en pointillés à la figure 2) devient supérieure à la charge du condensateur C2. On suppose, qu'avant cet instant t0, les commutateurs K1 et K2 sont ouverts et que le condensateur C2 alimente la charge tandis que le condensateur C1 est complètement déchargé. A partir de l'instant t0, le secteur alimente la charge en même temps qu'un courant de charge se met à circuler dans le premier chemin de charge, c'est-à-dire dans les condensateurs C1, C2 et la diode D1. Le condensateur C1 se charge. Le condensateur C2 complète légèrement sa charge mais moins rapidement. En effet, en raison de la différence de valeur entre les condensateurs C1 et C2, le condensateur C1 se charge beaucoup plus rapidement que le condensateur C2. On peut estimer que la tension aux bornes du condensateur C2 reste sensiblement constante. Ainsi, le courant Ic prélevé sur l'alimentation est en forme de C.dV/dt, où dV/dt suit l'allure de la tension alternative redressée et où C correspond à l'association en série des condensateurs C1 et C2. On peut donc considérer que le courant Ic correspond essentiellement au courant de charge du condensateur C1.

Lorsque l'alternance de la tension alternative redressée atteint son maximum (instant t1), le bloc 3 commande la fermeture du commutateur K2 pour activer le deuxième chemin de charge. A partir de l'instant t1, le condensateur C1 reste chargé grâce à la polarisation en inverse de la diode D1, tandis que le condensateur C2 complète sa charge sous un courant constant fixé par le dispositif limiteur de courant 2. Le courant Ic est donc sensiblement constant et correspond au niveau fixé par le dispositif 2.

A titre de variante non représentée, le dispositif 2 peut être remplacé par une résistance.

A un instant t2, le bloc 3 provoque l'ouverture du commutateur K2 et la fermeture du commutateur K1. En pratique, la fermeture du commutateur K1 est légèrement retardée par rapport à l'ouverture du commutateur K2. La charge est alors alimentée par les condensateurs. Cependant, en raison des différences de valeurs entre les condensateurs C1 et C2, le condensateur C2 ne se décharge que très légèrement tandis que le condensateur C1 fournit l'essentiel de l'alimentation de la charge.

Une fois que le condensateur C1 est complètement déchargé, la diode D2 entre en conduction, à un instant t4, ce qui active le deuxième chemin de décharge au moyen duquel le seul condensateur C2 alimente la charge. Le bloc 3 provoque alors l'ouverture du commutateur K1 de manière à éviter que le condensateur C1 se charge négativement par la charge connectée aux bornes A et G.

Le cas échéant, on peut prévoir qu'à un instant t3, légèrement antérieur à l'instant t4, on ferme le commutateur K2 pour garantir une décharge complète du condensateur C1 par l'intermédiaire du dispositif 2 et du commutateur K2. Dans ce cas, à l'instant t4, les deux commutateurs K1 et K2 sont ouverts simultanément. La période de fermeture du commutateur K2 entre les instants t3 et t4 est représentée en pointillés à la figure 2.

A un instant t'0 où la tension alternative redressée devient supérieure à la charge du condensateur C2, le fonctionnement exposé ci-dessus pour les instants t0 à t4 se reproduit pour les instants t'0 à t'4.

Un avantage de la présente invention est que le potentiel du point B entre les condensateurs C1 et C2 reste toujours à un potentiel faible par rapport à l'amplitude maximale de la tension alternative redressée. Par exemple, pour une tension secteur de 220 volts, le potentiel du point B reste inférieur à 100 volts.

Ainsi, on peut utiliser, pour le condensateur C1, un condensateur basse-tension qui est moins coûteux. De plus, même si pendant la décharge du condensateur C1, le courant efficace est important, la dissipation d'énergie est faible dans la mesure où le condensateur C1 présente une faible résistance série. De même, les commutateurs K1 et K2 voient seulement une tension limitée entre leurs bornes principales.

Un autre avantage de la présente invention est que la tension minimale, pouvant être délivrée à la charge sous une amplitude de tension alternative donnée, n'est pas réduite par l'adjonction de résistances en série avec les condensateurs, en particulier dans le premier chemin de charge. Ainsi, les pertes résistives sont minimisées.

On notera cependant que, dans certaines applications, il peut être souhaitable de limiter le courant d'appel lors de la charge du condensateur C2. On pourra, pour ce faire, avoir recours à un circuit extérieur classique.

On notera également que le point B peut facilement servir de base à un circuit fournissant la tension Vcc.

Un autre avantage de l'invention est que, si l'alimentation alternative disparaît, par exemple lors d'une coupure du secteur, la diode D2 permet que le condensateur C2 se mette automatiquement à alimenter la charge.

La commande des commutateurs K1 et K2 peut être réalisée par tout moyen classique, pourvu qu'elle soit synchronisée sur le secteur et qu'elle respecte les cycles de conduction décrits ci-dessus.

Le commutateur K1 est, par exemple, réalisé au moyen d'un thyristor, d'un transistor MOS ou d'un thyristor ouvrable par la gâchette. Le commutateur K2 est, par exemple, réalisé au moyen d'un transistor MOS ou d'un thyristor ouvrable par la gâchette. On notera que, dans le cas du commutateur K2, on ne peut pas utiliser un thyristor (sauf s'il est ouvrable par la gâchette) dans la mesure où le commutateur K2 doit pouvoir être fermé à l'instant t2 (et éventuellement à l'instant t3).

On notera également que dans le cas (non représenté) où le commutateur K2 est réalisé au moyen d'un transistor MOS, celui-ci peut servir à la fois de dispositif limiteur de courant 2 en prévoyant une régulation de courant dans le transistor MOS au moyen d'un transistor bipolaire et d'une résistance entre la source et la grille d'un transistor MOS à canal N.

Le dispositif d'amélioration du facteur de puissance selon l'invention se prête particulièrement bien à une intégration de ses composants. En effet, tous les composants semiconducteurs (diodes D1 et D2, commutateurs K1 et K2 et dispositif 2) ont une borne commune reliée à la masse. De plus, comme le potentiel du point B reste limité, le dispositif est réalisable dans des technologies basse-tension. Ainsi, les pertes en conduction sont minimisées et l'intégration est plus facile et moins onéreuse que dans le cas où les composants doivent supporter des tensions élevées.

A titre de variante non représentée, la diode D2 peut être remplacée par une diode Zener, ce qui permet une protection du circuit en cas de surtension.

Bien entendu, la présente invention est susceptible de diverses variantes et modifications qui apparaîtront à l'homme de l'art. En particulier, chacun des composants décrits pourra être remplacé par un ou plusieurs composants remplissant la même fonction. De même, le dimensionnement des différents composants, en particulier des condensateurs C1 et C2, est à la portée de l'homme de l'art en fonction des indications fonctionnelles données ci-dessus et de l'application à laquelle est destiné le dispositif d'amélioration du facteur de puissance.

## Revendications

1. Dispositif d'amélioration du facteur de puissance d'un pont redresseur (1) alimenté par une tension alternative (E1, E2) et destiné à fournir une alimentation continue redressée, **caractérisé en ce qu'**il comporte :
un premier et un deuxième condensateurs (C1, C2) montés en série, le deuxième condensateur (C2) étant de valeur supérieure à la valeur du premier condensateur (C1) ;
un premier chemin de charge (D1) essentiellement destiné à charger le premier condensateur (C1) à partir d'une tension fournie par le pont (1) ;
un deuxième chemin de charge (2, K2) comportant un commutateur (K2) et exclusivement destiné à charger le deuxième condensateur (C2) à partir de la tension fournie par le pont (1) ;
un premier chemin de décharge comportant un commutateur (K1) et essentiellement destiné au premier condensateur (C1) ;
un deuxième chemin de décharge (D2) exclusivement destiné au deuxième condensateur (C2), le deuxième chemin de charge et le premier chemin de décharge étant commutés pour fournir l'alimentation continue redressée ; et
un circuit (3) de commande pour commander individuellement les commutateurs.

2. Dispositif d'amélioration du facteur de puissance selon la revendication 1, **caractérisé en ce que** la fermeture du deuxième chemin de charge (2, K2) est synchronisée avec le passage à un maximum de la tension alternative alimentation (E1, E2).

3. Dispositif d'amélioration du facteur de puissance selon la revendication 1 ou 2, **caractérisé en ce qu'**il comporte un bloc de commande (3) pour commuter à l'état fermé le premier chemin de décharge (K1), uniquement après le passage par un maximum de la tension alternative d'alimentation (E1, E2).

4. Dispositif d'amélioration du facteur de puissance selon l'une quelconque des revendications 1 à 3, **caractérisé en ce que** le premier chemin de décharge comporte un premier commutateur (K1) intercalé entre le premier condensateur (C1) et une ligne d'alimentation redressée (G) constituant un potentiel de référence.

5. Dispositif d'amélioration du facteur de puissance selon la revendication 4, **caractérisé en ce que** le deuxième chemin de charge comporte un dispositif limiteur de courant (2) en série avec un deuxième commutateur (K2), entre le point milieu (B) de l'association série des condensateurs (C1, C2) et la ligne dé référence (G).

6. Dispositif d'amélioration du facteur de puissance selon la revendication 5, **caractérisé en ce que** le deuxième commutateur (K2) est commandable en ouverture et en fermeture.

7. Dispositif d'amélioration du facteur de puissance selon l'une quelconque des revendications 4 à 6, **caractérisé en ce que** le premier chemin de charge comporte une première diode (D1) en parallèle sur ledit premier commutateur (K1), le deuxième chemin de décharge comportant une deuxième diode (D2) montée entre le point milieu (B) entre les deux condensateurs (C1, C2) et la ligne de référence (G).

8. Dispositif d'amélioration du facteur de puissance selon la revendication 7, **caractérisé en ce que** ladite deuxième diode (D2) est une diode Zener.

9. Dispositif d'amélioration du facteur de puissance selon les revendications 5 ou 6 et, 7 ou 8, **caractérisé en ce que** lesdits commutateurs (K1, K2), lesdites diodes (D1, D2) et ledit dispositif limiteur de courant (2) sont réalisés au sein d'un même circuit intégré.

10. Dispositif d'amélioration du facteur de puissance selon l'une quelconque des revendications 1 à 9, **caractérisé en ce que** le premier condensateur (C1) est un condensateur basse-tension.

## Claims

1. A device for improving the power factor of a rectifying bridge (1) supplied by an a.c. voltage (E1, E2) and meant to issue a rectified d.c. supply, **characterized in that** it includes:
first and second capacitors (C1, C2) connected in series and having different values, the second capacitor (C2) having a capacitance greater than the capacitance of the first capacitor (C1);
a first charge path (D1) essentially for charging the first capacitor (C1) from a voltage provided by the bridge (1);
a second charge path (2, K2), comprising a switch (K2) and exclusively provided for charging the second capacitor (C2) from the voltage provided by the bridge (1);
a first discharge path (K1), switchable and essentially provided for the first capacitor (C1);
a second discharge path (D2) exclusively provided for the second capacitor (C2); the second charge path and the first discharge path being switched to provide said rectified d.c. supply; and
a control circuit (3) for individually controlling said switches.

2. A device for improving the power factor according to claim 1, **characterized in that** the turning on of the second charge path (2, K2) is synchronized with the transition through a maximum of the a.c. supply voltage (E1, E2).

3. A device for improving the power factor according to claim 1 or 2, **characterized in that** it includes a control block (3) for switching to the conductive state the first discharge path (K1), only after the transition through a maximum of the a.c. supply voltage (E1, E2).

4. A device for improving the power factor according to any of claims 1 to 3, **characterized in that** the first discharge path includes a first switch (K1) interposed between the first capacitor (C1) and a rectified supply line (G) constituting a reference potential.

5. A device for improving the power factor according to claim 4, **characterized in that** the second charge path includes a current limiting device (2) in series with a second switch (K2), between the midpoint (B) of the series association of the capacitors (C1, C2) and the reference line (G).

6. A device for improving the power factor according to claim 5, **characterized in that** the second switch (K2) is controllable to be turned on and off.

7. A device for improving the power factor according to any of claims 4 to 6, **characterized in that** the first charge path includes a first diode (D1) in parallel with the first switch (K1), the second discharge path including a second diode (D2) mounted between the midpoint (B) between the two capacitors (C1, C2) and the reference line (G).

8. A device for improving the power factor according to claim 7, **characterized in that** the second diode (D2) is a Zener diode.

9. A device for improving the power factor according to claims 5 or 6, and 7 or 8, **characterized in that** the switches (K1, K2), the diodes (D1, D2) and the current limiting device (2) are implemented within a same integrated circuit.

10. A device for improving the power factor according to any of claims 1 to 9, **characterized in that** the first capacitor (C1) is a low-voltage capacitor.

## Patentansprüche

1. Schaltung zur Verbesserung des Leistungsfaktors einer Gleichrichterbrücke (1), die von einer Wechselspannung (E1, E2) gespeist ist und eine kontinuierliche Gleichspannungsversorgung liefern soll, **dadurch gekennzeichnet, dass** sie folgende Merkmale aufweist:
einen ersten und einen zweiten Kondensator (C1, C2), die in Serie geschaltet sind, wobei der zweite Kondensator (C2) einen höheren Wert als der erste Kondensator (C1) aufweist;
einen ersten Ladeweg (D1) zum Laden des ersten Kondensators (C1) durch eine von der Brücke (1) gelieferte Spannung;
einen zweiten Ladeweg (2, K2), der einen Schalter (K2) aufweist und ausschließlich zum Laden des zweiten Kondensators (C2) durch die von der Brücke (1) gelieferte Spannung dient;
einen ersten Entladeweg, der einen Schalter (K1) aufweist und dem ersten Kondensator (C1) zugeordnet ist;
einen zweiten Entladeweg (D2), der ausschließlich dem zweiten Kondensator (C2) zugeordnet ist, wobei der zweite Entladeweg und der erste Entladeweg geschaltet werden, um die kontinuierliche Gleichspannungsversorgung zu liefern; und
eine Steuerschaltung (3), um die Schalter individuell zu steuern.

2. Schaltung zur Verbesserung des Leistungsfaktor nach Anspruch 1, **dadurch gekennzeichnet, dass** die Schließung des zweiten Ladeweges (2, K2) synchronisiert ist mit dem Durchgang der Speise-Wechselspannung (E1, E2) durch ein Maximum.

3. Schaltung zur Verbesserung des Leistungsfaktors nach Anspruch 1 oder 2, **dadurch gekennzeichnet, dass** sie einen Steuerblock (3) aufweist zum Umschalten auf den Zustand, der den ersten Entladeweg (K1) schließt, unmittelbar nach dem Durchgang der Speise-Wechselspannung (E1, E2) durch ein Maximum.

4. Schaltung zur Verbesserung des Leistungsfaktors nach einem der Ansprüche 1 bis 3, **dadurch gekennzeichnet, dass** der erste Entladeweg einen ersten Schalter (K1) aufweist, der zwischen dem ersten Kondensator (C1) und einer eine gleichgerichtete Speisespannung führenden Leitung (G) geschaltet ist, die ein Referenzpotential bildet.

5. Schaltung zur Verbesserung des Leistungsfaktors nach Anspruch 4, **dadurch gekennzeichnet, dass** der zweite Ladeweg eine Strombegrenzungseinrichtung (2) in Serie mit einem zweiten Schalter (K2) zwischen dem Mittelpunkt (B) der Serienanordnung der Kondensatoren (C1, C2) und der Bezugsleitung (G) aufweist.

6. Schaltung zur Verbesserung des Leistungsfaktors nach Anspruch 5, **dadurch gekennzeichnet, dass** der zweite Schalter (K2) zum Öffnen und Schließen ansteuerbar ist.

7. Schaltung zur Verbesserung des Leistungsfaktors nach einem der Ansprüche 4 bis 6, **dadurch gekennzeichnet, dass** der erste Ladeweg eine erste Diode (D1) parallel zu dem ersten Schalter (K1) aufweist, wobei der zweite Entladeweg eine zweite Diode (D2) aufweist, die zwischen dem Mittelpunkt (B) zwischen den zwei Kondensatoren (C1, C2) und der Referenzleitung (G) angeordnet ist.

8. Schaltung zur Verbesserung des Leistungsfaktors nach Anspruch 7, **dadurch gekennzeichnet, dass** die zweite Diode (D2) eine Zener-Diode ist.

9. Schaltung zur Verbesserung des Leistungsfaktors nach den Ansprüchen 5 oder 6 und 7 oder 8, **dadurch gekennzeichnet, dass** die Schalter (K1, K2), die Dioden (D1, D2) und die Strombegrenzungseinrichtung (2) in ein und derselben integrierten Schaltung realisiert sind.

10. Schaltung zur Verbesserung des Leistungsfaktors nach einem der Ansprüche 1 bis 9, **dadurch gekennzeichnet, dass** der erste Kondensator (C1) ein Niederspannungs-Kondensator ist.
